# EUROPEAN PATENT APPLICATION

(11) **EP 2 930 666 A1**
(43) Date of publication of application: **14.10.2015**
(21) Application number: 15160753.8
(22) Date of filing: 25.03.2015
(51) Int. Cl.: G06Q 10/00, G06Q 10/04, G06Q 10/06, G06Q 10/08

(54) **Integrated part inventory management system and method**

(30) Priority: 09.04.2014 US 201414249125
(71) Applicant: Simmonds Precision Products, Inc., Vergennes, VT 05491 (US)
(72) Inventor: Dion, Bernard, Monkton, VT Vermont 05473 (US); Bruce, Kyle Michael, Burlington, VT Vermont 05401 (US); Sopko, Richard Joseph, South Burlington, VT Vermont 05403 (US); Dewind, Eric, Burlington, VT Vermont 05401 (US); Kaeding, Scott E., Madison, AL Alabama 35756 (US); Roach, Jarad, Burlington, VT Vermont 05401 (US); Michaels-Corcoran, Kevin, Guntersville, AL Alabama 35976 (US)
(74) Representative: Hughes, Andrea Michelle

(57) **Abstract**

A method includes receiving, by an inventory management system (IMS) program (12) executing on a computing device, a remaining useful life (RUL) formulation for a part of a machine that estimates an amount of time for which the part will continue to perform its intended function and a potential unscheduled maintenance event. The method also includes receiving, by the IMS program, replacement part order lead time data and anticipated replacement part inventory level data from a part inventory database. The method also includes determining, by the IMS program and based on the RUL formulation, the replacement part order lead time data, and the anticipated part replacement inventory level data, that an order for a replacement part should be initiated.

## Description

### BACKGROUND

The present invention relates to inventory management systems and methods and more specifically to inventory management systems and methods for tracking machine replacement parts.

Commercial and military organizations generally maintain inventories of spare replacement parts for the equipment and vehicles within their respective fleets. Commercial production planners strive to manage inventory levels with a goal of maximizing the operating income for companies. Military logisticians, on the other hand, manage inventory levels with a focus on maintaining the availability and operational readiness of equipment. Minimizing the cost of maintaining proper inventory levels is a struggle for both commercial and military organizations. Some parts can be expensive, can be difficult to transport, can be scarce, or can possess exceptionally long lead times. For example, aerospace replacement parts, when compared to those used in the commercial automotive industry, tend to fit this category. In addition to the costs of procuring the inventories of spare replacement parts, there are costs associated with maintaining and managing those inventories, such as the cost of warehouse storage space and the manpower cost to maintain the warehouse, track and/or record the parts, and protect the parts against theft and damage.

Naturally, carrying excessive amounts of spare replacement parts in inventory is undesirable. However, the risk of unacceptable downtime for business or mission critical equipment and vehicles routinely drives the need for elevated inventory levels of these parts. Current techniques for estimating the demand for these parts do not provide enough accuracy for inventory managers to confidently reduce inventory levels to a minimum. Thus, high value replacement parts are often ordered in excess and placed in storage where the replacement parts take up valuable warehouse space and burden budgets when the replacement parts could be used by other parties.

### SUMMARY

In one aspect, a method (claim 1) includes receiving, by an inventory management system (IMS) program executing on a computing device, a remaining useful life (RUL) formulation for a part of a machine that estimates an amount of time for which the part will continue to perform its intended function and a potential unscheduled maintenance event. The method also includes receiving, by the IMS program, replacement part order lead time data and anticipated replacement part inventory level data from a part inventory database. The method also includes determining, by the IMS program and based on the RUL formulation, the replacement part order lead time data, and the anticipated part replacement inventory level data, that an order for a replacement part should be initiated.

In another aspect, a system (claim 11) includes a computing device having at least one processor. The system also includes an inventory management system (IMS) program executable by the at least one processor of the computing device. The IMS program is configured to receive a remaining useful life (RUL) formulation for a part of a machine that estimates an amount of time for which the part will continue to perform its intended function and a potential unscheduled maintenance event. The IMS program is also configured to receive replacement part order lead time data and anticipated replacement part inventory level data from a part inventory database. The IMS program is also configured to determine, based on the RUL formulation, the replacement part order lead time data, and the anticipated part replacement inventory level data, whether and when a user should order a replacement part.

Persons of ordinary skill in the art will recognize that other aspects and embodiments of the present invention are possible in view of the entirety of the present disclosure, including the accompanying figures.

### BRIEF DESCRIPTION OF THE DRAWINGS

FIG. 1 depicts a process flow of an embodiment of an inventory management system executed on a computing device.
FIG. 2 is a block diagram illustrating one example of the computing device for executing the inventory management system shown in FIG. 1.
FIG. 3 depicts an embodiment of a user interface of the inventory management system of FIG. 1.
FIG. 4 depicts another embodiment of a user interface of the inventory management system of FIG. 1.

While the above-identified drawing figures set forth one or more embodiments of the invention, other embodiments are also contemplated. In all cases, this disclosure presents the invention by way of representation and not limitation. It should be understood that numerous other modifications and embodiments can be devised by those skilled in the art, which fall within the scope of the principles of the invention. The figures may not be drawn to scale, and applications and embodiments of the present invention may include features and components not specifically shown in the drawings. Like reference numerals identify similar structural elements.

### DETAILED DESCRIPTION

In at least some embodiments, the present invention relates generally to a system and method for reducing excessive inventory carrying costs while enhancing fleet operation readiness. The present system and method includes an inventory management system (IMS), manifested as a software program executed on a computing device, that can receive a remaining useful life (RUL) formulation for at least one service part of at least one machine or vehicle in service of a fleet. The RUL formulation estimates when an unscheduled maintenance event of the service part might occur. The IMS can also receive part inventory data for the replacement part from a part inventory database. The IMS can use the part inventory data for the replacement part coupled with the unscheduled maintenance event of the service part estimated by the RUL formulation to determine whether and when the replacement part should be ordered. Persons of ordinary skill in the art will recognize additional features and benefits in view of the entirety of the present disclosure, including the accompanying figures.

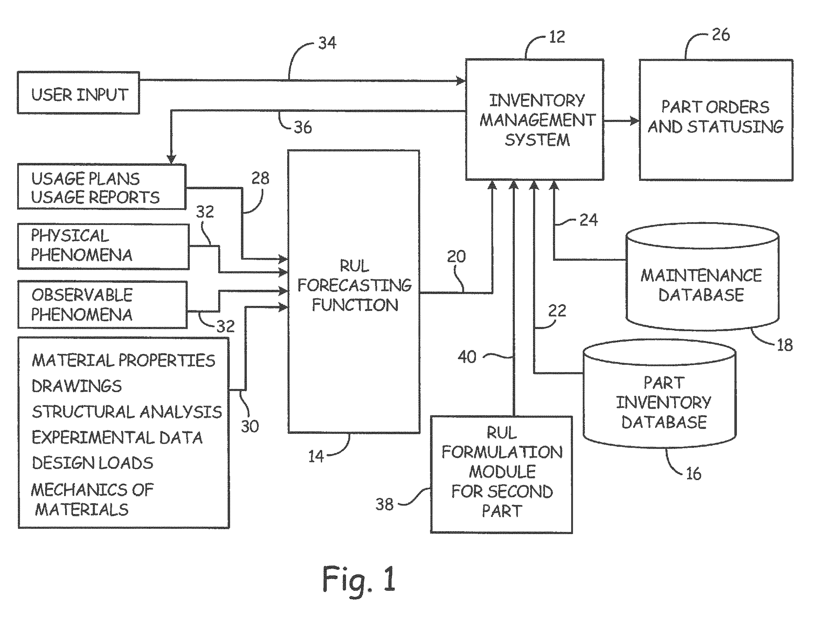

FIG. 1 depicts a process flow of an embodiment of a system and method 10 managing inventory strategy levels for replacement parts of at least one service part of at least one machine or vehicle in service. As shown in FIG. 1, the system and method 10 can include an inventory management system (IMS) 12, a remaining useful life (RUL) formulation module 14, a part inventory database 16, and a maintenance database 18. The RUL formulation module 14 is configured to generate a RUL formulation 20 for the service part. The part inventory database 16 can contain replacement part inventory data 22 and the maintenance database 18 can contain maintenance events data 24 of the service part. The IMS 10 can generate at least one output 26. The system and method 10 can also include forecasted loading usage estimations 28 of the service part, material and structural properties data 30 of the service part, and historical degradation data 32 of the service part.

The RUL formulation 20 for the service part of the machine in service can estimate an amount of time for which the service part will continue to perform its intended function and when a potential unscheduled maintenance event might occur for the service part. The RUL formulation 20 can be a function of at least one of the material and structural properties data 30 of the service part, the forecasted loading usage estimations of the service part 28, and the historical degradation data 32 of the service part.

The material and structural properties data 30 of the service part can include at least one of the following: geometry data of the service part, material data of the service part, design loads of the service part, mechanics of materials of the service part, structural analysis of the service part, environmental factors, and experimental data of the service part. The material and structural properties data 30 of the service part can be generally generic between the service part of the machine and other parts of the same make, material, and design as the service part that are used in other machines or held in inventory as spare replacement parts.

The forecasted loading usage estimations 28 of the service part can include estimations of length of time of future usage of the service part and the machine, environmental conditions of the future usage of the service part, and load amounts of the future usage of the service part. Because the machine can be used more frequently or in a different manner than separate machines of the same make and design, the forecasted loading usage estimations 28 of the service part are generally specific to the service part and can vary between separate service parts of the same make, material, and design found in the separate machines or in another area of the machine. The forecasted loading usage estimations 28 can include schedules of future missions or jobs of the service part and the machine. The forecasted loading usage estimations 28 of the service part can also include load usage report data detailing use of the service part over time. The load usage report data of the service part can help predict the future usage of the part when the future usage of the service part is unknown or unscheduled, and the future usage of the service part will likely be similar to the use of the service part in the relatively recent past. The load usage report data can be stored and provided from the same database or server as the forecasted loading usage estimations 28.

The historical degradation data 32 of the service part can include physical phenomena data of the service part gathered by at least one sensor disposed proximate the service part, such as a strain gauge mounted on the service part. The historical degradation data 32 can also include observable phenomena data of the service part gathered at least in part via manual inspection of the service part, such as visual inspection for cracks or wear in the service park. The physical phenomena data and the observable phenomena data can be periodically collected, such as on a daily or weekly basis, and uploaded to a storable memory medium of the system 10, or to a server that is in communication with the system 10.

The material and structural properties data 30 of the service part, the forecasted loading usage estimations 28 of the service part, and/or the historical degradation data 32 of the service part can be stored in computer-readable memory on one or more computing devices. Prior to generating the RUL formulation 20, the RUL formulation module 14 can receive the material and structural properties data 30 of the service part, the forecasted loading usage estimations 28 of the service part, and/or the historical degradation data 32 of the service part. Once the RUL formulation module 14 has received the material and structural properties data 30 of the service part, the forecasted loading usage estimations 28 of the service part, and/or the historical degradation data 32 of the service part, the RUL formulation module 14 can model (in the form of the RUL formulation 20) the possible future performance of the service part of the machine and estimate an amount of time for which the service part will continue to perform its intended function and when the service part will likely require unscheduled maintenance or replacement. An embodiment of the RUL formulation module 16 and the RUL formulation 20 is described in greater detail in U.S. Patent Application No. 14/153,317, filed on January 13, 2014, and entitled "Remaining Useful Life Forecasting System", which is incorporated by reference for all that it contains.

Once the RUL formulation module 16 has generated the RUL formulation 20 for the service part, the IMS 12 receives the RUL formulation 20. The IMS can also receive the replacement part inventory data 22 from the part inventory database 16. The part inventory database 16 can include multiple databases containing the replacement part inventory data 22. The replacement part inventory data 22 can include anticipated replacement part inventory level data and replacement part order lead time data. The anticipated replacement part inventory level data can describe how many replacement parts for the service part are available and the location of the replacement parts, e.g., stored internally in a specified warehouse or stored externally by a specific distributor. The replacement part order lead time data can describe how long the preparation and shipment of a replacement part will take from where the replacement part is stored, or how long manufacturing of the replacement part will take if none are available. Based on the RUL formulation 20 and the replacement part inventory data 22 received by the IMS 12, the IMS 12 can determine whether an order for a replacement part should be initiated. If the IMS 12 determines that the order for the replacement part should be initiated, the IMS can further determine when the order for the replacement part should be initiated. For example, if the RUL formulation 20 received by the IMS 12 estimates that the remaining useful life of the service part will degrade to an unacceptable level in approximately eight weeks, but the replacement part inventory data 22 received by the IMS 12 indicates a two week lead time to receive a replacement part order, the IMS 12 can determine that the order for the replacement part should be made no later than six weeks from the present to ensure the replacement part will be on hand when the service part requires maintenance. When the IMS 12 determines that the order for the replacement part should be initiated, IMS 12 can generate output 26 and display output 26 via an electronic monitor or other suitable display device, indicating that the order should be initiated. Along with indicating that the order should be initiated, output 26 of IMS can also include order, shipping, and backorder status information for the replacement part.

IMS 12 can also receive the scheduled maintenance events data 24 from the maintenance database 18. The scheduled maintenance events data 24 can include information regarding scheduled routine maintenance of the service part that might be required due to regulatory safety standards, industry standards, or internal standards implemented by an organization that owns the machine in service containing the service part. Once the IMS 12 has received the scheduled maintenance events data 24, the IMS 12 can compare the potential unscheduled maintenance event generated by the RUL formulation 20 with the scheduled maintenance events data 24. If the scheduled maintenance events data 24 indicates that a scheduled maintenance event of the service part is due earlier than the unscheduled maintenance event estimated by the RUL formulation 20, the IMS 12 can adjust the output 26 such that the order for the replacement part should be initiated so as to time the arrival of the replacement part for the scheduled maintenance event and not the unscheduled maintenance event.

As shown in FIG. 1, the system and method 10 can also include an input 34, and an adjustment command 36. The system and method 10 can also include another RUL formulation module 38 for generating another RUL formulation 40 of a second service part of a second machine in service, the second service part having the same design and properties as the service part discussed above. Similar to the RUL formulation 20 of the service part discussed above, the RUL formulation 40 of the second service part can be a function of at least one of material and structural properties data of the second service part, forecasted loading usage estimations of the second service part, and historical degradation data of the second service part. Because the second service part has the same design and properties as the service part discussed above, the material and structural properties data of the second service part can be substantially the same as the material and structural properties data 30 of the service part. The forecasted loading usage estimations and historical degradation data of the second service part can be different from the service part discussed above since the second service part can experience different loading conditions and have different future use plans than the service part.

The IMS 12 can receive the RUL formulation 40 of the second service part and can compare the RUL formulation 20 for the service part of the machine to the RUL formulation 40 of the second service part. By comparing the RUL formulation 20 of the service part with the RUL formulation 40 of the second service part, and by analyzing the replacement part inventory data 22, the IMS 12 can determine a probability of potential shortage of the replacement part. For example, if the RUL formulation 20 estimates that the service part will have an unscheduled maintenance event in six weeks, and the RUL formulation 40 estimates that the second service part will have an unscheduled maintenance event in four weeks, yet the replacement part inventory data 22 indicates that only one replacement part can be located, the IMS 12 can indicate in the output 26 that there is a high probability that the replacement part will not be available for the service part should the unscheduled maintenance event occur in six weeks. Should the IMS 12 indicate in the output 26 that there is a high probability of a shortage of the replacement part, a user or an automated control can send the input 34 to the IMS 12. Upon receiving the input 34, the IMS 12 can respond by generating the adjustment command 36 with instructions to modify the forecasted loading usage estimations 36 of the service part such that the RUL formulation 20 of the part modifies the timing of the unscheduled maintenance event of the service part further out into the future. By predicting the probability of shortage of the replacement part and modifying the timing of the unscheduled maintenance event of the service part, the IMS 12 affords fleet and inventory managers the information and time need to request the manufacturing of a replacement part and adjust the usage of the fleet to compensate for the shortage of the replacement part. While the system 10 has been described as having another RUL formulation module 38 for generating the RUL formulation 40 for the second service part, it is understood that RUL formulation module 14 can be configured to generate the RUL formulation 20 for the service part and the RUL formulation 40 for the second service part. As discussed below, the IMS 12 can be executed on a computing device.

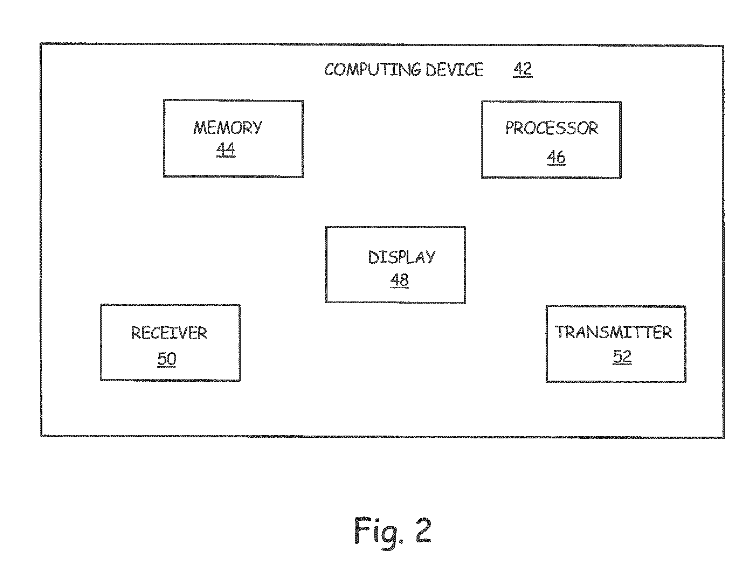

FIG. 2 is a block diagram illustrating one example of a computing device 42 for executing the IMS 12 and the RUL formulation module 14. While the IMS 12 and RUL formulation module 14 are described as being executed on a computing device 42, it is understood that one or more of the IMS 12 and the RUL formulation module 14 can be stored in computer-readable memory on one or more computing devices implementing functionality attributed to the system 10, that is, one or more of the IMS 12 and the RUL formulation module 14 can be implemented on a single computing device or multiple computing devices that distribute functionality of the IMS 12 and/or the RUL formulation module 14 among the computing devices.

The computing device 42 can be a mainframe computer, a server computer, a desktop computer, a laptop computer, a tablet computer, a smartphone, or other type of computing device. The computing device 42 can include memory 44, a processor 46, a display 48, a receiver 50, and a transmitter 52 interconnected via communication buses. The memory 44 is operatively connected to the processor 46, and the processor 46 is operatively connected to the display 48. The memory 44 can include a tangible, non-transitory computer-readable storage medium having the IMS 12 and the RUL formulation module 14 stored thereon as computer-readable instructions. The processor 46 can execute the IMS 12 and the RUL formulation module 14. The display 48 can provide the output 26 of the IMS 12 executed by the processor 46 to a user. The display can include a sound card, a video graphics card, a speaker, a liquid crystal display (LCD), a cathode ray tube (CRT) monitor, or any other type of device for outputting information in a form understandable to users or machines. The memory 44 and the processor 46 can be operatively coupled to a receiver 50 and a transmitter 52 for the transfer of data over a communications network.

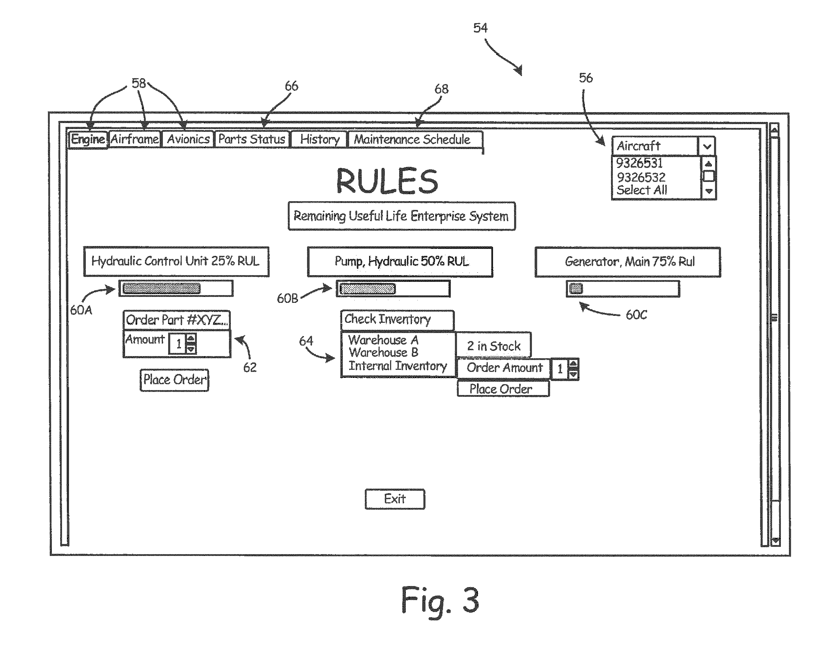

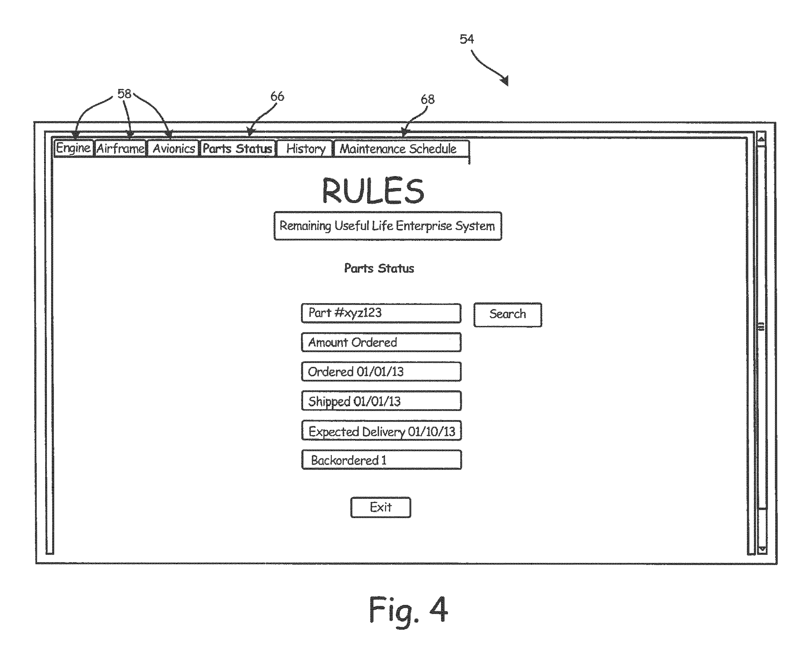

The part inventory database 16, the maintenance database 18, the forecasted loading usage estimations 28 of the service part, the material and structural properties data 30 of the service part, and the historical degradation data 32 of the service part, discussed above, can be stored on and/or executed by one or more computing devices, such as the computing device 42, or one or more remote computing devices (e.g., servers) connected via a communications network. In certain examples, the one or more remote computing devices can be operatively connected to distribute functionality among the one or more computing devices, which is sometimes referred to as a "cloud" computing network. The communications network can include a cellular network, a local area network (LAN), a wide area network (WAN) such as the Internet, a wireless LAN (WLAN), or other types of networks. The communication network can also include multiple communication networks. The computing device 42 can also include a user interface for IMS 12, as discussed below with reference to FIGS. 3 and 4.

FIGS. 3 and 4 will be discussed concurrently. FIG. 3 depicts an embodiment of a user interface 54 for the IMS 12 discussed above with reference to FIG. 1. FIG. 4 depicts another view of the user interface 54 for the IMS 12. The user interface 54 can include a machine menu 56, machine system tabs 58, RUL alerts 60A, 60B, and 60C for individual service parts of each machine system, an order menu 62, an inventory search option 64, a replacement parts status tab 66, and a maintenance schedule tab 68.

While the IMS 12 has been described above with reference to FIG. 1 as primarily managing inventory strategy levels for at least one service part of at least one machine or vehicle in service, the IMS 12 can manage inventory strategy levels for multiple service parts in multiple machines in service. The machine menu 56 of the user interface 54 allows a user to select a specific machine or vehicle in service among a list of machines and vehicles managed by the IMS 12. Machine system tabs 58 can subdivide and categorize the service parts of each machine by their system. For example, if the machine is an aircraft, the machine system tabs 58 can include an engine tab that lists engine service parts of the aircraft that are managed by the IMS 12, an airframe tab that lists airframe service parts of the aircraft that are managed by the IMS 12, and an avionics tab that lists avionics service parts of the aircraft that are managed by the IMS 12. The RUL alerts 60A, 60B, and 60C can inform the user of the RUL formulation 20 of each service part and whether an order for a replacement part should be made. As shown by way of example in FIG. 3, the RUL alert 60A indicates that the remaining useful life for a service part (a hydraulic control unit) is at 25%, meaning the service part is within the last quarter of its life and that a replacement part should be ordered. The inventory search option 64 allows a user to browse and search the part inventory database 16 for the replacement part. The order menu 62 allows the user to select and request a desired number of the replacement part. The replacement parts status tab 66, shown in greater detail in FIG. 4, allows the user to review the order status information for a specified replacement part. Maintenance schedule tab 68 allows the user to review the maintenance events data received by the IMS 12 from the maintenance database 18 discussed above with reference to FIG. 1. While the invention has been described above with reference to the embodiments disclosed in FIGS. 1-4, other configurations and arrangements can be used in alternative embodiments.

Persons of ordinary skill in the art will recognize that system and method 10 with IMS 12 can provide numerous advantages and benefits. Some examples of those advantages and benefits are as follows. Based on the RUL formulation 20 and the replacement part inventory data 22 received by the IMS 12, the IMS 12 can approximately determine when an unscheduled maintenance event of the service part might occur and when an order for a replacement part should be initiated, thereby timing the arrival of the replacement part just in time for the unscheduled maintenance event of the service part. As discussed above with reference to FIG. 1, the IMS 12 can also determine a probability of potential shortage of the replacement part by comparing the RUL formulation 20 of the service part with the RUL formulation 40 of a second service part, and by analyzing the replacement part inventory data 22. Because the IMS 12 can time the arrival of the replacement part just in time for the unscheduled maintenance event and can determine the probability of shortage of the replacement part, inventory managers can confidently reduce inventory levels to a minimum and make adjustments when necessary to minimize the effects of a potential shortage.

The following are non-exclusive descriptions of possible embodiments of the present invention.

In one embodiment, a method includes receiving, by an inventory management system (IMS) program executing on a computing device, a remaining useful life (RUL) formulation for a part of a machine that estimates an amount of time for which the part will continue to perform its intended function and a potential unscheduled maintenance event. The method also includes receiving, by the IMS program, replacement part order lead time data and anticipated replacement part inventory level data from a part inventory database. The method also includes determining, by the IMS program and based on the RUL formulation, the replacement part order lead time data, and the anticipated part replacement inventory level data, that an order for a replacement part should be initiated.

The method of the preceding paragraph can optionally include, additionally and/or alternatively, any one or more of the following features, configurations and/or additional components:
generating an output, by the IMS program, indicating that the order for the replacement part should be initiated;
receiving, by the IMS program executing on the computing device, scheduled maintenance events data from a maintenance database; and comparing, by the IMS program executing on the computer device, the potential unscheduled maintenance event with the scheduled maintenance events data;
displaying, by the IMS program executing on the computing device, replacement part order, shipping, and backorder status information;
the RUL formulation is a function of at least one of the following: material and structural properties data of the part; forecasted loading usage estimations of the part; and historical degradation data of the part;
the material and structural properties data of the part includes at least one of geometry data of the part, material data of the part, design loads of the part, mechanics of materials of the part, structural analysis of the part, environmental factors, and experimental data of the part;
the forecasted loading usage estimations of the part includes estimations of length of time of future usage of the part, environmental conditions of future usage of the part, and load amounts of future usage of the part;
the historical degradation data of the part includes at least one of physical phenomena data of the part gathered by at least one sensor disposed proximate the part, and observable phenomena data of the part gathered at least in part via manual inspection of the part;
the RUL formulation is a function of load usage report data detailing a use of the part over time; and/or
receiving, by the IMS, the RUL formulation for the part of the machine from a remaining useful life (RUL) formulation module; receiving, by the RUL formulation module, material and structural properties data of the part; receiving, by the RUL formulation module, forecasted loading usage estimations of the part; receiving, by the RUL formulation module, historical degradation data of the part; and determining, by the RUL formulation module, the RUL formulation based upon an analysis of the material and structural properties data of the part, the forecasted loading usage estimations of the part, and the historical degradation data of the part.

In another embodiment, a system includes a computing device having at least one processor. The system also includes an inventory management system (IMS) program executable by the at least one processor of the computing device. The IMS program is configured to receive a remaining useful life (RUL) formulation for a part of a machine that estimates an amount of time for which the part will continue to perform its intended function and a potential unscheduled maintenance event. The IMS program is also configured to receive replacement part order lead time data and anticipated replacement part inventory level data from a part inventory database. The IMS program is also configured to determine, based on the RUL formulation, the replacement part order lead time data, and the anticipated part replacement inventory level data, whether and when a user should order a replacement part.

The system of the preceding paragraph can optionally include, additionally and/or alternatively, any one or more of the following steps, features, and/or configurations:
the IMS program is further configured to: compare the RUL formulation for the part of the machine to a RUL formulation of a second part of same design of a second machine; and determine, based on the RUL formulation of the part, the RUL formulation of the second part, and the anticipated part replacement inventory level data, a probability of potential shortage of the replacement part;
the RUL formulation of the part is a function of at least one of the following: material and structural properties data of the part; forecasted loading usage estimations of the part; and historical degradation data of the part;
the RUL formulation of the second part is a function of at least one of the following: material and structural properties data of the second part; forecasted loading usage estimations of the second part; and historical degradation data of the second part, wherein the material and structural properties data of the second part is substantially the same as the material and structural properties data of the part; and/or
the IMS program is further configured to: receive an input and adjust the forecasted loading usage estimations of the part based on the input to modify a timing of the potential unscheduled maintenance event.

Any relative terms or terms of degree used herein, such as "substantially", "essentially", "generally" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transitory vibrations and sway movements, temporary alignment or shape variations induced by operational conditions, and the like.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method comprising:
receiving, by an inventory management system (IMS) program executing on a computing device, a remaining useful life (RUL) formulation for a part of a machine that estimates an amount of time for which the part will continue to perform its intended function and a potential unscheduled maintenance event;
receiving, by the IMS program, replacement part order lead time data and anticipated replacement part inventory level data from a part inventory database; and
determining, by the IMS program and based on the RUL formulation, the replacement part order lead time data, and the anticipated part replacement inventory level data, that an order for a replacement part should be initiated.

2. The method of claim 1, further comprising:
generating an output, by the IMS program, indicating that the order for the replacement part should be initiated.

3. The method of claim 1, further comprising:
receiving, by the IMS program executing on the computing device, scheduled maintenance events data from a maintenance database; and
comparing, by the IMS program executing on the computer device, the potential unscheduled maintenance event with the scheduled maintenance events data.

4. The method of claim 1, further comprising:
displaying, by the IMS program executing on the computing device, replacement part order, shipping, and backorder status information.

5. The method of claim 1, wherein the RUL formulation is a function of at least one of the following:
material and structural properties data of the part;
forecasted loading usage estimations of the part; and
historical degradation data of the part.

6. The method of claim 5, wherein the material and structural properties data of the part includes at least one of geometry data of the part, material data of the part, design loads of the part, mechanics of materials of the part, structural analysis of the part, environmental factors, and experimental data of the part.

7. The method of claim 5, wherein the forecasted loading usage estimations of the part includes estimations of length of time of future usage of the part, environmental conditions of future usage of the part, and load amounts of future usage of the part.

8. The method of claim 5, wherein the historical degradation data of the part includes at least one of physical phenomena data of the part gathered by at least one sensor disposed proximate the part, and observable phenomena data of the part gathered at least in part via manual inspection of the part.

9. The method of claim 5, wherein the RUL formulation is a function of load usage report data detailing a use of the part over time.

10. The method of claim 1, further comprising:
receiving, by the IMS, the RUL formulation for the part of the machine from a remaining useful life (RUL) formulation module;
receiving, by the RUL formulation module, material and structural properties data of the part;
receiving, by the RUL formulation module, forecasted loading usage estimations of the part;
receiving, by the RUL formulation module, historical degradation data of the part; and
determining, by the RUL formulation module, the RUL formulation based upon an analysis of the material and structural properties data of the part, the forecasted loading usage estimations of the part, and the historical degradation data of the part.

11. A system (10) comprising:
a computing device comprising at least one processor; and
an inventory management system (IMS) (12) program executable by the at least one processor of the computing device and configured to:
receive a remaining useful life (RUL) formulation for a part of a machine that estimates an amount of time for which the part will continue to perform its intended function and a potential unscheduled maintenance event;
receive replacement part order lead time data and anticipated replacement part inventory level data from a part inventory database; and
determine, based on the RUL formulation, the replacement part order lead time data, and the anticipated part replacement inventory level data, whether and when a user should order a replacement part.

12. The system (10) of claim 11, wherein the IMS program (12) is further configured to:
compare the RUL formulation for the part of the machine to a RUL formulation of a second part of same design of a second machine; and
determine, based on the RUL formulation of the part, the RUL formulation of the second part, and the anticipated part replacement inventory level data, a probability of potential shortage of the replacement part.

13. The system (10) of claim 12, wherein the RUL formulation of the part is a function of at least one of the following:
material and structural properties data (30) of the part;
forecasted loading usage estimations (28) of the part; and
historical degradation data (32) of the part.

14. The system (10) of claim 13, wherein the RUL formulation of the second part is a function of at least one of the following:
material and structural properties data of the second part;
forecasted loading usage estimations of the second part; and
historical degradation data of the second part,
wherein the material and structural properties data of the second part is substantially the same as the material and structural properties data of the part.

15. The system (10) of claim 14, wherein the IMS program (12) is further configured to:
receive an input and adjust the forecasted loading usage estimations of the part based on the input to modify a timing of the potential unscheduled maintenance event.
